Europäisches Patentamt

(19) European Patent Office

Office européen des brevets

(11) Publication number: **0 215 755 B1**

# EUROPEAN PATENT SPECIFICATION

(12)

(45) Date of publication of the patent specification: 20.12.89

(21) Application number: **86850213.9**

(22) Date of filing: **16.06.86**

(51) Int. Cl.⁴: **A01K 61/00**

---

## (54) Device for fish breeding.

---

(30) Priority: **23.08.85 SE 8503939**

(43) Date of publication of application:
**25.03.87 Bulletin 87/13**

(45) Publication of the grant of the patent:
**20.12.89 Bulletin 89/51**

(84) Designated Contracting States:
**DE FR GB IT NL SE**

(56) References cited:
**EP-A- 0 092 531
AT-B- 254 605
DD-A- 228 438
GB-A- 2 018 551**

(73) Proprietor: **Flygt AB, Box 1309, S-171 25 Solna(SE)**

(72) Inventor: **Nyman, Lars-Erik, Bredavägen 60,
S-180 10 Enebyberg(SE)**

(74) Representative: **Larsson, Sten, Flygt AB Box 1309,
S-171 25 Solna(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention concerns a device for breeding fish, shellfish etc. in tanks lowered into water.

The most common type of fish breeding today means that the fish is contained in nets lowered into the sea, a lake or a water current. Fresh water is then continously fed which is a condition for the breeding, unless special purification plants are used.

The disadvantages with such systems are several. Purifications and food waste may be collected at the bottom under the net, poisen the surroundigs and sometimes even the fish. In addition there is often a big waste of food and the nets must quite often be cleaned from alga. Finally the breeding is depending on the temperature of the surrounding water as well as on the contents of oxygen and natural nourishment. These conditions are of course depending on the season which means that the growth sometimes is very low.

Fish breeding in closed tanks provided with purification plants has up to now turned out to be too expensive to be utilized in a large scale, primarily because the breeding must take place on land.

According to the invention the problem is solved to breed fish etc. in an effective and at the same time inexpensive way. The invention is described more closely below with reference to the enclosed drawings.

DD-A 228 438 shows a device where closed breeding tanks are arranged partly submersed in water. This solution brings about certain advantages, especially from an aesthetic point of view.

Our invention goes beyond the known solutions and the problem to breed fish etc. is solved in an effective and at the same time very inexpensive way. The invention is described more closely below with reference to the enclosed drawing.

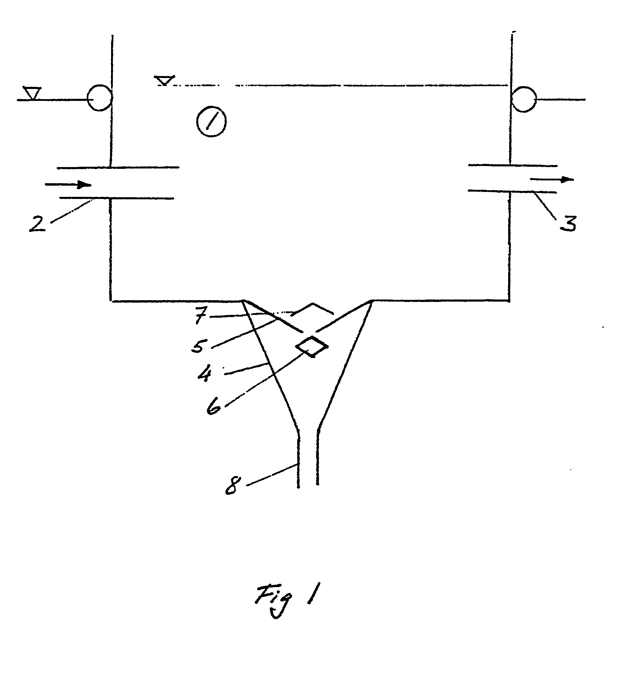

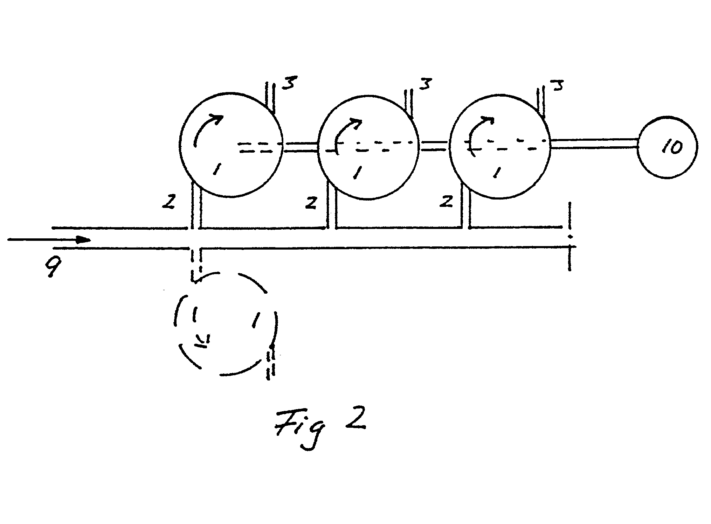

Fig 1 shows a tank according to the invention seen from the side, while Fig 2 shows a plant for fishbreeding with several tanks seen from above.

In the drawings 1 stands for a tank having an inlet and an outlet 2 and 3 resp. 4 stands for a sludge collector with means 5 and 6 for collecting of gas, 7 a protection cover and 8 an outlet. 9 stands for a common feeding line and 10 a collecting tank for sludge.

A preferably cylinder formed tank 1 made of canvas, soft plastic or some other non rigid material is lowered into the water, for instance the sea, which tank contains fish or other water animals. The tank has an inlet 2 and an outlet 3 so dimensioned, that the water level in the tank always is above that of the surrounding water, thus obtaining that the tank walls are tightened out by the higher static pressure.

According to the embodiment, the inlet is tangentially arranged, thus causing a circular flow in the tank. This arrangement has two advantages. The fishes are forced to swim against the current around in the tank which stimulates the feeding and minimizes the waste. In addition polutions are collectd in the center of the tank and are there easy to remove.

The tank water is taken from a point in the sea where the water temperature is suitable and/or where the oxygen content and the amount of natural nourishment are big. The transport may be carried out by an equipment described in the Swedish patent No 8202429-0.

In the center of the tank bottom there is a device for collection of sludge designed like a hopper having relatively steep sides. The pollutions on the tank bottom will then be collected in the hopper and concentrate in its bottom. The hopper is provided with a cover 5 inclined towards the center having a central hole which in its turn is screened by a body 6 at a distance below the cover. In this way gas generated in the sludge is prevented from coming up into the tank 1 and poisen the fish. The gas is instead collected at the periphery in the upper part of the hopper and may be evacuated. In order to prevent bigger bodies, such as dead fishes, from falling into the hopper, it is preferably provided with a net or a protection sheet 7.

The lower part of the hopper 4 is connected to an outlet pipe 9 through which the sludge is removed towards a collecting tank 10. This may be carried out by attaching the pipe to a pump or by temporarily increasing the pressure in the tank 1 in comparison with the pressure in the tank 10. The latter tank may be common for several breeding tanks and is arranged to treat the sludge in a suitable way. The system is closed and no pollutions will be let out to the surroundings.

In order to secure feeding of water from outside in case the normal feeding should break down, the upper part of the tank 1 may be provided with barred security openings. Under normal conditions the openings are closed from inside by covers pressed against the valls by the static pressure. In case of a stop, the pressures are equalized, the openings are uncovered and water flows into the tank to keep the fishes alive until the error is corrected.

The device according to the invention and the plant that may be built by help of the device have a long range of advantages compared with previous known solutions. Some of the most important are the following:

The tank is manufactured in a relatively inexpensive material and can, thanks to the big water exchange, be treated to minimize the growth of alga. The closed tank also means that disease in one tank is not spread to other tanks in the same plant.

The water rotation in the tank means that the fishes swim and eat maximally, thus minimizing the waste. The rotation also means that the pollutions are collected in the center for easy removing.

Fresh water may be taken from a point where the temperature is suitable, where the oxygen content or the amount of natural nourishment are good.

The device and the plant may be placed anywhere. It does not pollute the surroundings and is not influenced by pollutions in the latter. In addition ice may be avoided by feeding warmer water during wintertime.

Collecting, sorting and disinfecting of the fish may be simplified by pumping out the water in the tank, the walls then being folded and the bottom being brought upwards towards the surrounding water surface.

In the separately arranged sludge collecting tank an effective treatment may be carried out which does not have any effect on the environment. The system can also be provided with an integrated complete purification system.

## Claims

1. A device for breeding fish, shellfish, etc. comprising a circular tank provided with floating elements arranged partly submersed in water with only its upper part above the surrounding water surface and provided with a preferably tangentially directed horizontal inlet and outlet resp for water connected to tubes or hoses, and where the tankbottom is provided with a mainly conically formed sludge collector (4) including an outlet pipe (8), characterized in that the tank walls are made of a non-rigid material such as canvas or soft plastic and that the inlet (2) and outlet (3) are so dimensioned that the tank walls are tightened out by a pressure difference between the inner of the tank and the surrounding water, the sludge collector (4) including a collector for gas (5, 6).

2. A device according to claim 1, characterized in, that the outlet (3) is provided with throttle means so dimensioned, that a certain overpressure is obtained in the tank.

3. A device according to claim 1, characterized in, that the sludge collecting device (4) is formed like a hopper having relatively steep walls, its base heading the tank bottom, having a conically formed cover (5) with a central hole (5), the latter being screened by a body (6) arranged at a distance below the hole (5), thus preventing gas from the sludge in the hopper from going into the tank (1), the gas being collected at the periphery of the upper part of the hopper from where it is evacuated.

4. A device according to claim 1, characterized in that the water which is brought to the tank (1) is taken from a point at a distance where there is a suitable temperature and/or where the oxygen content and natural nourishment are sufficient.

5. A device according to claim 1, characterized in that several tanks (1) are arranged, each tank connected to a common feeding pipe (9) for water and pipes for removing of sludge to a common sludge collecting tank (10).

6. A device according to claim 1, characterized in that the transport of sludge from the sludge collecting device (4) to the sludge collecting tank (10) is obtained by a change of their relative static pressures.

7. A device according to claim 1, characterized in that the tank (1) is provided with one or several barred openings which are normally closed by covers on the inside which are pressed against the bars by the higher static pressure within the tank (1).

8. A device according to claim 1, characterized in that the tank bottom may be raised for a temporary reduction of the tank volume.

## Patentansprüche

1. Vorrichtung für die Aufzucht von Fischen, Schalentieren usw., mit einem kreisförmigen Tank, der mit Schwimmelementen ausgestattet ist, teilweise ins Wasser eingetaucht angeordnet ist, von dem nur der obere Teil über der umgebenden Wasseroberfläche liegt und der mit einem vorzugsweise in Tangentialrichtung weisenden horizontalen Einlaß bzw. Auslaß für Wasser an Rohre oder Schläuche angeschlossen ist, wobei der Tankboden mit einer im großen und ganzen konisch ausgebildeten Schlammsammeleinrichtung (4) mit einem Auslaßrohr (8) versehen ist, dadurch gekennzeichnet, daß die Tankwände aus einem nicht starren Material, wie Segeltuch oder weichem Kunststoff, gebildet sind und daß der Einlaß (2) und der Auslaß (3) derart dimensioniert sind, daß die Tankwände durch einen Druckunterschied zwischen dem Inneren des Tanks und dem umgebenden Wasser straffgespannt sind, wobei die Schlammsammeleinrichtung (4) eine Sammeleinrichtung für Gas (5, 6) beinhaltet.

2. Vorrichtung nach Anspruch 1, dadurch gekennzeichnet, daß der Auslaß (3) mit einer derart dimensionierten Drosseleinrichtung ausgestattet ist, daß sich in dem Tank ein gewisser Überdruck einstellt.

3. Vorrichtung nach Anspruch 1, dadurch gekennzeichnet, daß die Schlammsammeleinrichtung (4) nach Art eines Trichters ausgebildet ist, der relativ steile Wände aufweist und dessen zum Tankboden hin gelegene Basis eine konisch ausgebildete Abdeckung (5) mit einer zentralen Öffnung (5) aufweist, wobei letztere durch einen in einem Abstand unter der Öffnung (5) angeordneten Körper (6) abgedeckt ist und dadurch Gas aus dem Schlamm in dem Trichter an einem Eindringen in den Tank (1) gehindert ist, wobei das Gas an dem Randbereich des oberen Teils des Trichters gesammelt wird und von dort ausgeleitet wird.

4. Vorrichtung nach Anspruch 1, dadurch gekennzeichnet, daß in den Tank (1) eingeleitetes Wasser von einer entfernten Stelle entnommen ist, wo eine geeignete Temperatur vorherrscht und/oder wo der Sauerstoffgehalt und die natürliche Ernährung ausreichend sind.

5. Vorrichtung nach Anspruch 1, dadurch gekennzeichnet, daß mehrere Tanks (1) vorgesehen sind und jeder Tank mit einem gemeinsamen Zuführrohr (9) für Wasser sowie mit Rohren zum Entfernen von Schlamm zu einem gemeinsamen Schlammsammelbehälter (10) verbunden ist.

6. Vorrichtung nach Anspruch 1, dadurch gekennzeichnet, daß der Transport von Schlamm von der Schlammsammelvorrichtung (4) zu dem Schlammsammelbehälter (10) durch eine Veränderung der relativen statischen Druckwerte derselben erzielt wird.

7. Vorrichtung nach Anspruch 1, dadurch gekennzeichnet, daß der Tank (1) mit einer oder mehreren versperrten Öffnungen versehen ist, die durch Abdeckungen an der Innenseite normalerweise geschlossen sind, welche durch den höheren statischen Druck innerhalb des Tanks (1) gegen die Sperren gedrückt werden.

8. Vorrichtung nach Anspruch 1, dadurch gekennzeichnet, daß sich der Tankboden für eine vorübergehende Reduzierung des Tankvolumens anheben läßt.

**Revendications**

1. Dispositif pour élever des poissons, des crustacés, etc., comprenant une cuve circulaire munie d'éléments flottants, partiellement immergée dans l'eau, seule sa partie supérieure émergeant de la surface de l'eau environnante, et munie d'une entrée et, respectivement, d'une sortie d'eau horizontales tangentielles reliées à des tuyaux rigides ou flexibles, et dans lequel le fond de la cuve est muni d'un collecteur de boue sensiblement de forme conique (4) comportant une conduite de sortie (8), le collecteur de boue (4) comportant un collecteur de gaz (5, 6), caractérisé en ce que les parois de la cuve sont réalisées en matériau non rigide, tel que de la toile ou de la matière plastique souple, et en ce que l'entrée (2) et la sortie (3) sont dimensionnées de façon que les parois de la cuve soient rendues étanches par la différence de pression existant entre l'intérieur de la cuve et l'eau environnante.

2. Dispositif conforme à la revendication 1, caractérisé en ce que la sortie (3) est munie de moyens d'étranglement conçus de façon à réaliser une certaine surpression dans la cuve.

3. Dispositif conforme à la revendication 1, caractérisé en ce que le dispositif de collecte de boue (4) est conçu sous la forme d'une trémie possédant des parois relativement raides, sa base étant tournée vers le fond de la cuve, possédant un couvercle de forme conique (5) muni d'un trou central protégé par un corps (6) disposé à distance sous le trou (5) et empêchant le gaz provenant de la boue se trouvant dans la trémie de pénétrer dans la cuve (1), ce gaz étant collecté à la périphérie de la partie supérieure de la trémie d'où il est évacué.

4. Dispositif conforme à la revendication 1, caracterisé en ce que l'eau qui est amenée à la cuve (1) est prélevée en un point distant où elle est à température appropriée et/ou où la teneur en oxygène et la nourriture naturelle sont suffisantes.

5. Dispositif conforme à la revendication 1, caractérisé en ce qu'il est prévu plusieurs cuves (1) qui sont chacune reliées à une conduite d'alimentation en eau commune (9) et à des conduites permettant d'envoyer la boue dans une cuve commune de collecte de boue (10).

6. Dispositif conforme à la revendication 1, caractérisé en ce que le transport de la boue du dispositif de collecte de boue (4) à la cuve de collecte de boue (10) s'effectue en modifiant leurs pressions statiques relatives.

7. Dispositif conforme à la revendication 1, caractérise en ce que la cuve (1) est munie d'une ou plusieurs ouvertures obturées qui sont normalement fermées à l'intérieur par des couvercles qui sont appliqués contre les ouvertures par la pression statique supérieure régnant à l'intérieur de la cuve (1).

8. Dispositif conforme à la revendication 1, caractérisé en ce que le fond de la cuve peut être élevé pour réduire temporairement le volume de la cuve.

Fig 1

EP 0 215 755 B1

Fig 2